# FASCICULE DE BREVET EUROPEEN

(11) **EP 0 822 636 B1**
(45) Date de publication et mention de la délivrance du brevet: **04.10.2001**
(21) Numéro de dépôt: 97401830.1
(22) Date de dépôt: 30.07.1997
(51) Int. Cl.: H02J 7/14

(54) **Dispositif portable de commande à distance d'un organe fonctionnel de véhicule automobile**
Tragbare Vorrichtung zur Fernsteuerung eines funktionellen Organes eines Kraftwagens
Portable device for the remote control of a functional element of an automobile

(30) Priorité: 31.07.1996 FR 9609670
(43) Date de publication de la demande: 04.02.1998
(73) Titulaire: AUTOMOBILES PEUGEOT, 75116 Paris (FR); AUTOMOBILES CITROEN, 92200 Neuilly-sur-Seine (FR)
(72) Inventeur: Dallemagne, Daniel, 78700 Conflans Sainte Honorine (FR)
(74) Mandataire: Habasque, Etienne Joel Jean-François

(56) Documents cités:
- US-A- 5 347 186
- PATENT ABSTRACTS OF JAPAN vol. 016, no. 198 (C-0939), 13 mai 1992 & JP 04 030865 A (SONY CORP), 3 février 1992,

## Description

La présente invention concerne un dispositif portable de commande à distance d'un organe fonctionnel de véhicule automobile.

On connaît déjà dans l'état de la technique, un certain nombre de dispositifs de commande de ce type qui comportent un boîtier dans lequel sont disposés une source d'énergie électrique, des moyens de génération d'un signal de commande de l'organe fonctionnel et des moyens d'émission de celui-ci en direction du véhicule.

De tels dispositifs sont par exemple utilisés pour commander les systèmes de condamnation/décondamnation centralisés des ouvrants des véhicules et/ou les systèmes d'alarme de ceux-ci.

Les moyens d'émission comprennent quant à eux des moyens d'émission à rayonnement infrarouge ou à radiofréquence du signal de commande en direction du véhicule.

Dans l'état de la technique, la source d'énergie électrique est constituée par une ou plusieurs piles électriques disposées dans un boîtier du dispositif de commande à distance.

Cependant, l'utilisation de telles piles présentent un certain nombre d'inconvénients, car il est nécessaire de pouvoir les remplacer lorsque celles-ci sont usagées.

On conçoit alors que ceci impose de pouvoir ouvrir le boîtier du dispositif, ce qui peut poser un certain nombre de problèmes d'étanchéité de celui-ci.

Par ailleurs, la nécessité de pouvoir remplacer les piles interdit de souder celles-ci sur un circuit électronique quelconque, ce qui peut également se traduire par des problèmes de fiabilité des contacts électriques entre la ou les piles et le reste des circuits.

Enfin, si les piles ne sont pas changées régulièrement, le dispositif de commande peut ne plus fonctionner à la suite de la décharge complète de celles-ci.

Le but de l'invention est donc de résoudre ces problèmes.

A cet effet, l'invention a pour objet un dispositif portable de commande à distance d'un organe fonctionnel de véhicule automobile, du type comportant une source d'énergie électrique, des moyens de génération d'un signal de commande de l'organe fonctionnel et des moyens d'émission de celui-ci en direction du véhicule, caractérisé en ce que la source d'énergie électrique comporte un convertisseur d'énergie cinétique de déplacement du dispositif en énergie électrique dont la sortie est reliée à des moyens d'accumulation d'énergie, comprenant des premiers moyens d'accumulation à faible capacité de stockage d'énergie et à charge rapide et des seconds moyens d'accumulation à capacité de stockage d'énergie et à temps de charge plus importants que ceux des premiers moyens.

Un convertisseur transformant l'énergie cinétique d'un mouvement linéaire en énergie électrique est par exemple connu du document US-A-5 347 186.

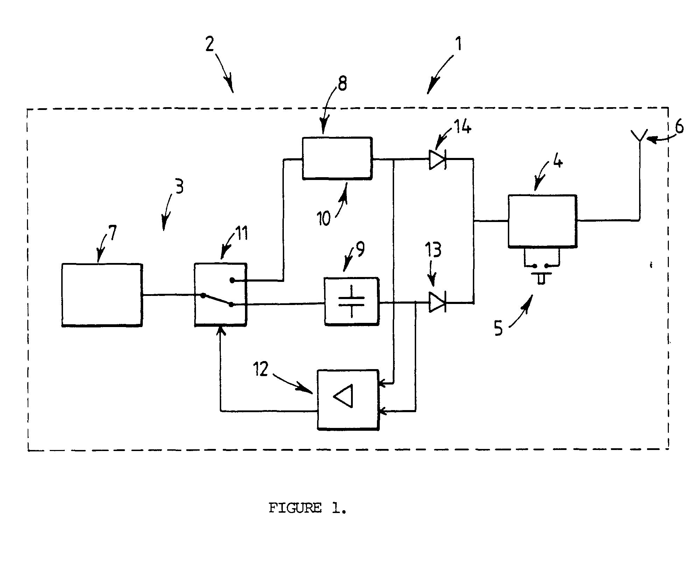

L'invention sera mieux comprise à l'aide de la description qui va suivre donnée uniquement à titre d'exemple et faite en se référant au dessin annexé qui représentent un schéma synoptique illustrant la structure générale d'un exemple de réalisation d'un dispositif de commande à distance selon l'invention.

On reconnaît en effet sur cette figure, un dispositif portable de commande à distance d'un organe fonctionnel d'un véhicule automobile, ce dispositif étant désigné par la référence générale 1.

De façon générale, un tel dispositif est disposé dans un boîtier, désigné par la référence générale 2 et comporte une source d'énergie électrique désignée par la référence générale 3, des moyens de génération d'un signal de commande de l'organe fonctionnel, désignés par la référence générale 4 et associés par exemple à un bouton de commande désigné par la référence 5, la sortie de ces moyens de génération du signal de commande étant reliée à des moyens d'émission de celui-ci en direction du véhicule, ces moyens d'émission étant désignés par la référence générale 6.

On notera que ces moyens d'émission peuvent par exemple être des moyens d'émission à rayonnement infrarouge ou à radiofréquence et dans ce cas, ces moyens comprennent par exemple une antenne telle que celle illustrée sur cette figure.

On notera également que l'organe fonctionnel dont il y a lieu de commander le fonctionnement peut être le système de condamnation/décondamnation centralisé des ouvrants du véhicule et/ou le système d'alarme de celui-ci par exemple.

Selon l'invention, la source d'énergie 3 comporte un convertisseur d'énergie de déplacement du dispositif en énergie électrique désigné par la référence générale 7 sur cette figure, dont la sortie est reliée à des moyens d'accumulation d'énergie électrique désignés par la référence générale 8.

Ce convertisseur d'énergie produit de façon classique en soi de l'énergie électrique lorsqu'il est mis en mouvement, ce qui arrive fréquemment lors de l'utilisation du véhicule par exemple.

Un tel convertisseur est donc fréquemment en mouvement et il permet de convertir ces mouvements en énergie électrique pour assurer la charge des moyens d'accumulation 8.

On conçoit alors qu'il n'est plus nécessaire de prévoir la possibilité d'avoir accès à la source d'énergie électrique du dispositif à l'intérieur du boîtier de commande à distance, de sorte que celui-ci peut être complètement fermé et étanche.

Par ailleurs, le convertisseur et les moyens d'accumulation peuvent être soudés sur le reste des circuits du dispositif, ce qui permet de résoudre les problèmes de fiabilité des contacts entre ces moyens d'accumulation et le reste des circuits.

De plus, les moyens d'accumulation d'énergie désignés par la référence générale 8 sur cette figure peuvent comporter des premiers moyens d'accumulation 9 à faible capacité de stockage d'énergie et à charge rapide et des seconds moyens d'accumulation 10 à capacité de stockage d'énergie et à temps de charge plus importants que ceux des premiers moyens.

Ces premiers et seconds moyens d'accumulation 9 et 10 sont raccordés aux bornes de sortie respectives de moyens de commutation, désignés par la référence générale 11 sur cette figure, raccordés à la sortie du convertisseur 7 d'énergie cinétique de déplacement du dispositif en énergie électrique.

Le fonctionnement de ces moyens de commutation 11 est piloté par des moyens de commande 12 comprenant par exemple des moyens de comparaison de tension recevant en entrée les tensions présentes aux bornes des premiers et seconds moyens d'accumulation d'énergie 9 et 10.

On notera également que ces premiers et seconds moyens d'accumulation d'énergie sont raccordés aux moyens de génération 4 du signal de commande par l'intermédiaire d'organes à conduction unidirectionnelle, respectivement 13 et 14.

Avantageusement, les premiers moyens d'accumulation d'énergie 9 comprennent un condensateur à charge rapide permettant d'utiliser les moyens de génération un nombre réduit de fois.

Les seconds moyens d'accumulation d'énergie peuvent quant à eux comporter tout accumulateur classique.

Un tel dispositif est intéressant par exemple dans le cas où le dispositif de commande à distance n'est pas utilisé pendant un certain temps, ce qui est par exemple le cas d'un dispositif de commande à distance de secours, de sorte que les moyens d'accumulation d'énergie risquent d'être déchargés, ce qui empêche le fonctionnement des moyens de génération du signal de commande.

Dans ce cas, les moyens de comparaison 12 sont adaptés pour piloter les moyens de commutation 11 pour raccorder la sortie du convertisseur 7 aux premiers moyens d'accumulation d'énergie à charge rapide et à faible capacité de stockage d'énergie, 9, pour rendre très rapidement le dispositif de commande opérationnel, ces moyens se chargeant très rapidement.

Une fois que la tension aux bornes de ces premiers moyens 9 d'accumulation d'énergie est suffisante pour faire fonctionner les moyens de génération du signal de commande 4, les moyens de comparaison 12 sont adaptés pour piloter les moyens de commutation 11 afin de raccorder la sortie du convertisseur 7 aux seconds moyens d'accumulation d'énergie 10 afin de charger ceux-ci.

Une fois que ces seconds moyens d'accumulation d'énergie 10 sont suffisamment chargés, ils sont alors aptes à fournir l'énergie nécessaire aux moyens de génération du signal de commande 4.

La charge de ces seconds moyens 10 d'accumulation d'énergie prend un temps plus long que celle des premiers, pendant lequel l'alimentation des moyens de génération du signal de commande est assurée par les premiers moyens d'accumulation 9, ce qui permet d'avoir un dispositif opérationnel très rapidement.

Il va de soi bien entendu que différents modes de réalisation de ces différents moyens peuvent être envisagés. C'est ainsi par exemple que les moyens de commande 12 peuvent comporter des moyens autres que des moyens de comparaison de tension, tels que par exemple une minuterie permettant de commuter la sortie du convertisseur 7 des premiers sur les seconds moyens d'accumulation, au bout d'une période de temps de fonctionnement prédéterminée. On conçoit alors que cette structure présente un certain nombre d'avantages dans la mesure ou elle permet de rendre rapidement opérationnel un dispositif de commande à distance qui n'a pas été utilisé depuis un certain temps et dont les moyens d'accumulation d'énergie sont déchargés.

## Revendications

1. Dispositif portable de commande à distance d'un organe fonctionnel d'un véhicule automobile, du type comportant une source d'énergie électrique (3), des moyens (4) de génération d'un signal de commande de l'organe fonctionnel et des moyens (6) d'émission de celui-ci en direction du véhicule, **caractérisé en ce que** la source d'énergie électrique (3) comporte un convertisseur d'énergie cinétique de déplacement du dispositif en énergie électrique (7) dont la sortie est reliée à des moyens d'accumulation d'énergie (8), comprenant des premiers moyens (9) d'accumulation à faible capacité de stockage d'énergie et à charge rapide et des seconds moyens (10) d'accumulation à capacité de stockage d'énergie et à temps de charge plus importants que ceux des premiers moyens.

2. Dispositif de commande à distance d'un organe fonctionnel de véhicule automobile selon la revendication 1, **caractérisé en ce que** l'organe fonctionnel comporte le système de condamnation/décondamnation centralisé des ouvrants du véhicule.

3. Dispositif de commande à distance d'un organe fonctionnel de véhicule automobile selon la revendication 1 ou 2, **caractérisé en ce que** l'organe fonctionnel comporte le système d'alarme du véhicule.

4. Dispositif de commande à distance d'un organe fonctionnel de véhicule automobile selon l'une quelconque des revendications précédentes, **caractérisé en ce que** les moyens d'émission (6) sont des moyens d'émission à rayonnement infrarouge.

5. Dispositif de commande à distance d'un organe fonctionnel de véhicule automobile selon l'une quelconque des revendications 1 à 3, **caractérisé en ce que** les moyens d'émission (6) sont des moyens d'émission à radio-fréquence.

6. Dispositif selon l'une quelconque des revendications précédentes, **caractérisé en ce que** les premiers (9) et seconds (10) moyens d'accumulation d'énergie sont raccordés aux sorties respectives de moyens de commutation (11), dont l'entrée est reliée au convertisseur (7) et dont le fonctionnement est piloté par des moyens de commande (12), pour raccorder, dans un premier temps, les premiers moyens d'accumulation d'énergie (9) à la sortie du convertisseur (7) afin de charger ceux-ci rapidement et rendre le dispositif opérationnel et dans un second temps, lorsque la tension aux bornes de ces premiers moyens d'accumulation d'énergie (9) est suffisante pour faire fonctionner les moyens de génération du signal de commande (4), les seconds moyens d'accumulation d'énergie (10) à la sortie du convertisseur (7), afin de charger ceux-ci.

7. Dispositif selon la revendication 6, **caractérisé en ce que** les premiers moyens (9) d'accumulation d'énergie comprennent un condensateur.

8. Dispositif selon la revendication 6 ou 7, **caractérisé en ce que** les moyens de commande (12) comprennent des moyens de comparaison des tensions aux bornes des premiers et seconds moyens d'accumulation d'énergie (9,10).

9. Dispositif selon l'une quelconque des revendications précédentes, **caractérisé en ce que** les premiers et seconds moyens d'accumulation d'énergie (9,10) sont raccordés aux moyens de génération du signal de commande (4) à travers des organes à conduction unidirectionnelle (13,14).

## Patentansprüche

1. Tragbare Fernsteuervorrichtung für eine Funktionsbaugruppe eines Kraftfahrzeuges mit einer elektrischen Energiequelle (3), Einrichtungen (4) zum Erzeugen eines Steuersignals für die Funktionsbaugruppe und Einrichtungen (6) zum Ausgeben dieses Signals in Richtung auf das Fahrzeug, **dadurch gekennzeichnet, daß** die elektrische Energiequelle (3) einen Wandler zum Umwandeln der kinetischen Energie der Versetzung der Vorrichtung in elektrische Energie (7) umfaßt, dessen Ausgang mit Energiespeichereinrichtungen (8) verbunden ist, die erste Speichereinrichtungen (9) mit kleiner Energiespeicherkapazität und schneller Ladung und zweite Speichereinrichtungen (10) mit einer Kapazität zum Speichern von Energie und mit Ladungszeiten umfaßt, die größer als die der ersten Einrichtungen sind.

2. Fernsteuervorrichtung für eine Funktionsbaugruppe eines Kraftfahrzeuges nach Anspruch 1, **dadurch gekennzeichnet, daß** die Funktionsbaugruppe die Zentralverriegelung für die Fahrzeugtüren umfaßt.

3. Fernsteuervorrichtung für eine Funktionsbaugruppe eines Kraftfahrzeuges nach Anspruch 1 oder 2, **dadurch gekennzeichnet, daß** die Funktionsbaugruppe die Alarmanlage des Fahrzeuges umfaßt.

4. Fernsteuervorrichtung für eine Funktionsbaugruppe eines Kraftfahrzeuges nach einem der vorhergehenden Ansprüche, **dadurch gekennzeichnet, daß** die Sendeeinrichtungen (6) Einrichtungen zum Aussenden einer Infrarotstrahlung sind.

5. Fernsteuervorrichtung für eine Funktionsbaugruppe eines Kraftfahrzeuges nach einem der Ansprüche 1 bis 3, **dadurch gekennzeichnet, daß** die Sendeeinrichtungen (6) Hochfrequenzsendeeinrichtungen sind.

6. Vorrichtung nach einem der vorhergehenden Ansprüche, **dadurch gekennzeichnet, daß** die ersten und die zweiten Energiespeichereinrichtungen (9, 10) mit den Ausgängen jeweils von Kommutatoreinrichtungen (11) verbunden sind, deren Eingang mit dem Wandler (7) verbunden ist und deren Funktion über Steuereinrichtungen (12) gesteuert wird, um während einer ersten Zeit die ersten Energiespeichereinrichtungen (9) mit dem Ausgang des Wandlers (7) zu verbinden und dadurch diesen schnell aufzuladen und die Vorrichtung betriebsbereit zu machen und während einer zweiten Zeit, wenn die Spannung an den Anschlüssen der ersten Energiespeichereinrichtungen (9) ausreichend ist, um die Einrichtungen (4) zum Erzeugen des Steuersignals arbeiten zu lassen, die zweiten Energiespeichereinrichtungen (10) mit dem Ausgang des Wandlers (7) zu verbinden, um diese aufzuladen.

7. Vorrichtung nach Anspruch 6, **dadurch gekennzeichnet, daß** die ersten Energiespeichereinrichtungen (9) einen Kondensator umfassen.

8. Vorrichtung nach Anspruch 6 oder 7, **dadurch gekennzeichnet, daß** die Steuereinrichtungen (12) Einrichtungen zum Vergleichen der Spannungen an den Anschlüssen der ersten und der zweiten Energiespeichereinrichtungen (9, 10) umfassen.

9. Vorrichtung nach einem der vorhergehenden Ansprüche, **dadurch gekennzeichnet, daß** die ersten und die zweiten Energiespeichereinrichtungen (9, 10) mit den Einrichtungen (4) zum Erzeugen des Steuersignals über in einer Richtung leitende Bauelemente (13, 14) verbunden sind.

## Claims

1. Portable device for the remote control of a functional element of an automobile, of the type comprising an electrical energy source (3), means (4) for generating a control signal for the functional element and means (6) for transmitting the latter towards the vehicle, **characterized in that** the electrical energy source (3) comprises a converter of kinetic energy of displacement of the device into electrical energy (7) whose output is connected to means of energy accumulation (8), comprising first means (9) of accumulation with low energy storage capacity and which can be charged rapidly and second means (10) of accumulation with greater energy storage capacity and charging time than those of the first means.

2. Remote control device for a functional element of an automobile according to Claim 1, **characterized in that** the functional element comprises the central locking/unlocking system for the openable panels of the vehicle.

3. Remote control device for a functional element of an automobile according to Claim 1 or 2, **characterized in that** the functional element comprises the vehicle alarm system.

4. Remote control device for a functional element of an automobile according to any one of the preceding claims, **characterized in that** the transmission means (6) are infrared radiation transmission means.

5. Remote control device for a functional element of an automobile according to any one of Claims 1 to 3, **characterized in that** the transmission means (6) are radio-frequency transmission means.

6. Device according to any one of the preceding claims, **characterized in that** the first (9) and second (10) means of energy accumulation are linked to the respective outputs of switching means (11), whose input is connected to the converter (7) and whose operation is controlled by control means (12), so as to link, initially, the first means of energy accumulation (9) to the output of the converter (7) so as to charge them rapidly and render the device operational and subsequently, when the voltage across the terminals of these first means of energy accumulation (9) is sufficient to operate the means for generating the control signal (4), the second means of energy accumulation (10) to the output of the converter (7). so as to charge them.

7. Device according to Claim 6, **characterized in that** the first means (9) of energy accumulation comprise a capacitor.

8. Device according to Claim 6 or 7, **characterized in that** the control means (12) comprise means for comparing the voltages across the terminals of the first and second means of energy accumulation (9, 10).

9. Device according to any one of the preceding claims, **characterized in that** the first and second means of energy accumulation (9, 10) are linked to the means for generating the control signal (4) through unidirectional-conduction elements (13, 14).
